# EUROPEAN PATENT SPECIFICATION

(11) **EP 0 695 020 B1**
(45) Date of publication and mention of the grant of the patent: **11.09.2002**
(21) Application number: 95630086.7
(22) Date of filing: 18.07.1995
(51) Int. Cl.: H02K 19/06, H02K 29/00, H02P 6/20

(54) **Auxiliary starting switched reluctance motor**
Anlaufhilfe für einen getakteten Reluktanzmotor
Moteur à reluctance variable avec dispositif auxiliaire de démarrage

(30) Priority: 25.07.1994 US 280077
(43) Date of publication of application: 31.01.1996
(73) Proprietor: EMERSON ELECTRIC CO., St. Louis Missouri 63136 (US)
(72) Inventor: Horst, Gary Edward, Manchester, Missouri 63021 (US)
(74) Representative: Waxweiler, Jean

(56) References cited:
- EP-A- 0 601 818
- DE-A- 4 003 455
- US-A- 5 294 856

## Description

This invention relates to dynamo-electric machines and, more particularly, to a switched reluctance motor (SRM) having an auxiliary starting capability.

In United States patents 5,239,217, 5,122,697, 5,111,096, 4,942,345, and 5 294 856 and in US patent applications 043,294/08, 175,516/08, and 175,561/08, all of which are assigned to the same assignee as the present invention, various improvements in switched reluctance motors have been described. One problem in switched reluctance motors which still needs to be addressed is that of overcoming the inertia required to start the motor; i.e., producing enough starting torque to start the motor. The problem is particularly acute when the friction, or no load torque on the motor, is greater than torque that a magnet can produce to move the rotor to a preferred position for starting. One solution to the problem is to use a two-phase switched reluctance motor, for example, in place of a single phase SRM. However, such a solution has associated cost penalties because of the phase switching circuitry and associated sensors (rotor position sensors) which are required with the motor.

EP 0601818 A1 discloses a machine having windings arranged to define similar adjacent poles. The similar poles in a group define flux paths with adjacent pole groups. Thus the flux paths required are restricted to those between adjacent dissimilar pole groups. Parking magnets are mounted at the side of stator poles in the space between the poles of a pole group. In an embodiment the parking magnets are electromagnets. A control circuit operates to excite the parking electromagnet to align the rotor prior to starting.

The object of the invention is to provide a dynamo-electric machine without the disadvantages recited for prior art machine.

This object is achieved according to the invention by the machine described in the independent claims. Embodiments of the invention are described in the dependent claims.

In accordance with the invention, such a dynamoelectric machine may be a single-phase switched reluctance motor; such a switched reluctance motor having two auxiliary coils or windings to facilitate starting the motor; in such a switched reluctance motor the coils may be energized while the motor is off to align a rotor of the motor with the auxiliary coils; in such a motor the auxiliary coils may be switched out of a motor circuit after starting because the auxiliary coil is not required during normal motor running conditions; in such a motor alignment of the rotor enables a phase winding of the motor to produce sufficient torque to start the motor; such a motor may employ a shifted pole to even out the available torque over the widest angle the auxiliary coils can produce to realign the rotor; such a motor may have a stepped air gap between stator poles and rotor poles; in such a motor the auxiliary coils may require less copper than the phase winding; and, such a motor may be a less expensive motor than a two-phase motor because electronic switches and rotor sensors required with two-phase motors are not required.

Other objects and features will be in part apparent and in part pointed out hereinafter.

### Brief Description of the Drawings

Fig. 1 is a sectional view of a single-phase prior art switched reluctance motor;
Fig. 2 is a sectional view of single-phase switched reluctance motor of the present invention;
Fig. 3 is a view similar to Fig. 2, but with an auxiliary coil of the motor energized;
Fig. 4A is a schematic of an electrical control circuit used with the motor to start the motor;
Fig. 4B is an alternate embodiment of a control circuit for starting the motor;
Fig. 4C is another alternate embodiment of the control circuit;
Fig. 4D is a third alternate embodiment of the control circuit;
Fig. 5 illustrates an alternate auxiliary winding embodiment in which more copper is made available for the primary stator winding;
Fig. 6 is a sectional view of the motor of Figs. 2 and 3 with stepped rotor poles;
Fig. 7 is a sectional view of the motor with a shifted stator pole construction.
Fig. 8 is a sectional view of another embodiment of the motor; and,
Fig. 9 is a schematic of an alternate embodiment.

Corresponding reference characters indicate corresponding parts throughout the drawings.

### Description of Preferred Embodiments

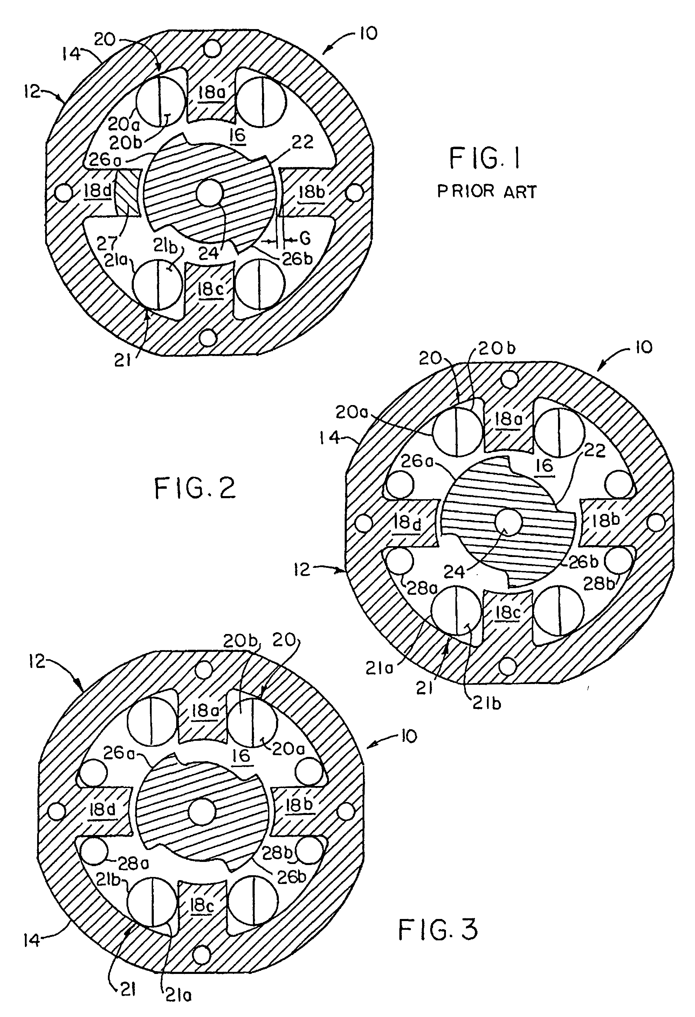

Referring to the drawings, a dynamo-electric machine 10 is shown in Fig. 1. Machine 10 is single-phase switched reluctance motor. As such, it first includes a stator assembly 12 including a stator 14 having a central bore 16. The stator further has a plurality of inwardly salient poles (18a-18d) extending into bore 16. While stator 14 is shown to have four poles, it will be understood that there could be more than four stator poles without departing from the scope of the invention. In addition, the stator assembly includes stator windings 20 and 21 installed on the stator poles. In Fig. 1, the windings are installed on opposed stator poles 18a, 18c. The stator windings are energized when the motor is running to produce a magnetic field, all as is well-known in the art. Coils 20 and 21 are each bifilar coils having respective coil sections 20a, 20b, and 21a, 21b. The bifilar coils return stored energy back to the DC bus when a phase is de-energized.

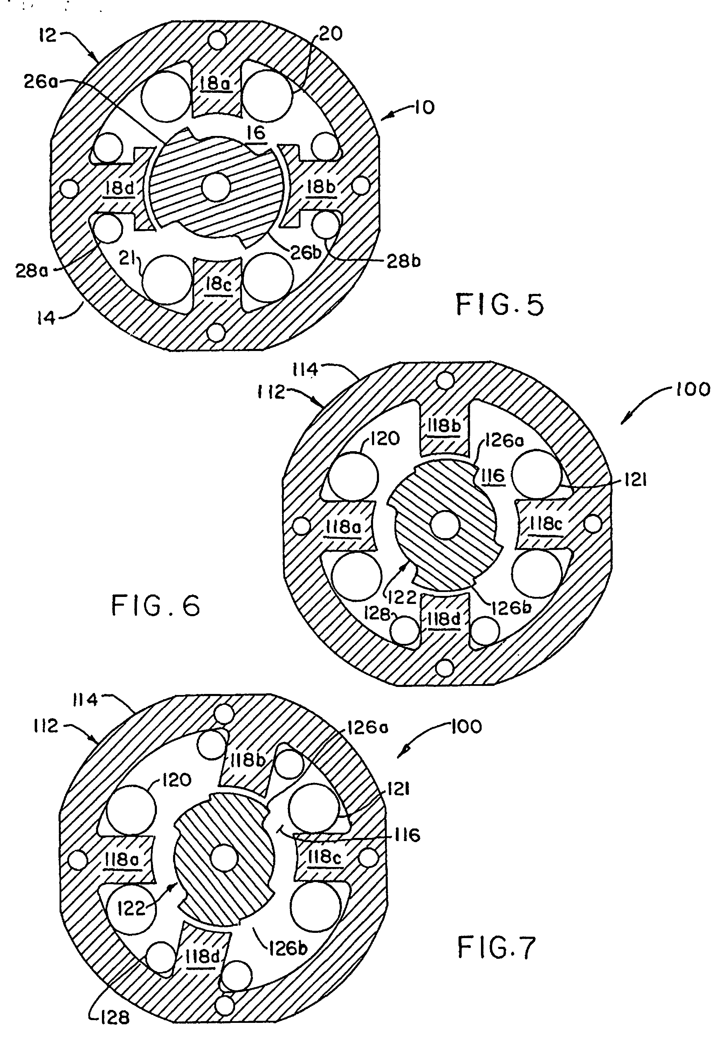

Next, a rotor 22 is mounted on a rotor shaft 24. The rotor is disposed in bore 16 for rotation relative to the stator assembly. When formed together, the rotor has a plurality of outwardly salient poles 26a, 26b. The poles extend outwardly into the bore. An air gap G is created between the respective outer ends of the stator and rotor poles. While rotor 22 is shown as only having two rotor poles; again, it could have more than two poles without departing from the scope of the invention. In Fig. 1, the rotor poles are shown to have a uniform outer surface so air gap G between the rotor and stator poles is uniform. As shown in Fig. 6, however, the rotor poles may have a stepped outer surface so there is a stepped air gap between the stator poles and rotor poles. Also as shown in Fig. 1, a magnet 27 may be attached to the outer end of the one of the stator poles. The function of magnet 27 is described in my previously mentioned patents and patent applications.

One problem with switched reluctance motors such as motor 10 is in starting the motor. When motor 10 is stopped, the position of the rotor poles relative to the stator poles is essentially random. This is the condition shown in Fig. 2. As a result, the starting torque necessary to be produced to next start the motor is variable over a wide range of values. The higher degree of torque necessary to overcome the inertia of the rotor, if the rotor has previously come to rest in an adverse position, can make starting the motor quite difficult.

To alleviate this problem, two auxiliary windings 28a and 28b are installed on stator assembly 12. Specifically, as shown in Fig. 2, winding 28a is installed on stator pole 18d, and winding 28b on stator pole 18b. These are opposed stator poles, and for the four pole construction of stator 14, the stator windings and auxiliary windings are installed on alternate poles. Importantly, and as described hereinafter, these auxiliary windings are energized when motor (10) is off, i.e. not running. By energizing the auxiliary windings at this time, a magnetic field is produced which causes rotor 22 to be rotated to a preferred aligned position relative to the stator poles. This is the condition shown in Fig. 3. As shown therein, energization of the auxiliary windings aligns the rotor poles with the stator poles about which the auxiliary windings are installed. Positioning the rotor as shown in Fig. 3, while the motor is otherwise "off", facilitates subsequent starting of the motor. With respect to windings 28a, 28b, it will be noted that they are smaller windings than windings 20 and 21. In the embodiment of Fig. 5, the stator poles 18b' and 18d' have an enlarged outer end so the stator poles are essentially T-shaped. This pole shape is advantageous in that it helps increase the amount of copper available for the primary stator windings 20, 21.

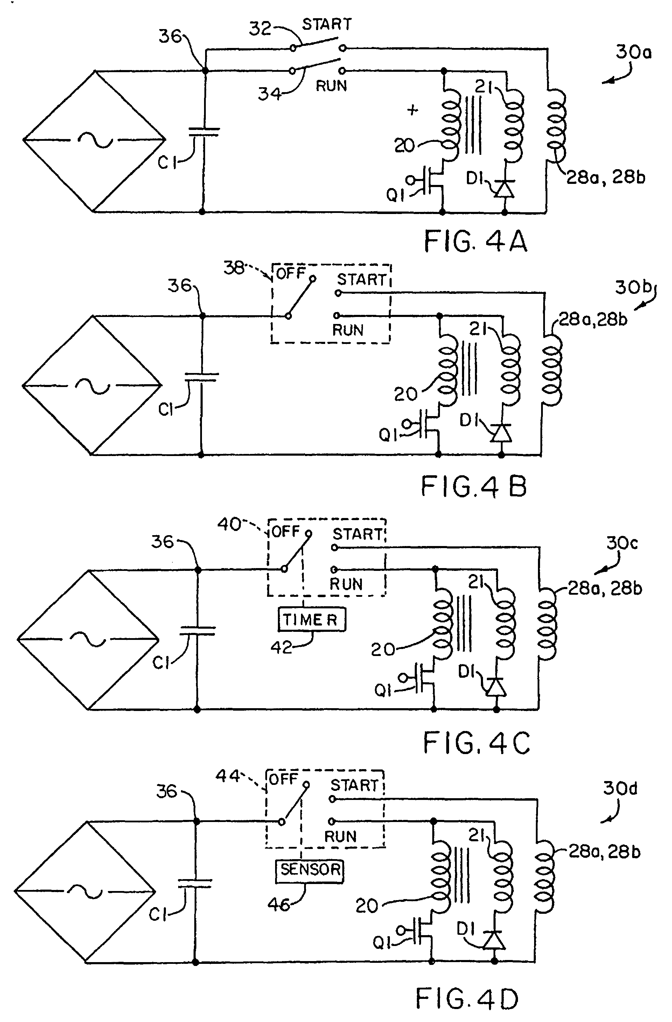

Referring to Figs. 4A-4D various embodiments of a control circuit means 30 are shown. Each embodiment 30a-30d of the control circuit means is for energizing the auxiliary windings when motor 10 is "off", and for energizing the stator windings 20a, 20b when motor 10 is started. In each instance, circuit means 30 de-energizes the auxiliary windings 28a, 28b prior to, or when, the stator windings are energized.

In Figs. 4A-4D, stator windings 20 and 21 are shown connected in parallel. Auxiliary windings 28a, 28b are connected in series. A semi-conductor switch Q1 is connected in series with stator windings 20 and 21, and a diode D1 is series connected with the other stator winding. In each instance, a capacitor C1 is connected between an AC power source and the respective stator winding and auxiliary winding circuits. In Fig. 4A, a pair of switches 32, 34 are interposed between the power source and the respective winding circuits. Switch 32 is a normally open switch which, when closed, routes DC power from the power source, through a common point 36 with switch 34, through switch 32, to the auxiliary windings. This energizes the windings to produce rotation of rotor 22 to the preferred aligned position of Fig. 3. Switch 32 is then opened, de-energizing these windings. Next, switch 34 is closed to route current through the stator windings to run the motor. Switch 34 is closed during the entire time the motor is running; the switch being opened when the motor is stopped.

Referring to Fig. 4B, control circuit 30b includes a switch 38 which is a multi-position switch. Switch 38 is, for example, a three position switch having a first and motor "off" position in which neither the stator windings nor auxiliary windings are energized. The switch has a second and motor "start" position in which the auxiliary windings 28a, 28b, but not the stator windings 20 and 21, are energized. Finally, the switch has a third and motor "run" position in which auxiliary windings are de-energized, and the stator windings are energized. The user of the motor, to start the motor, turns the switch from its "off" to its "start" position. This effects alignment of rotor 22 as previously discussed. When the user then turns the switch to "run", the motor should readily start and run for so long as the user intends.

In Fig. 4C, control circuit 30c has a multi-position switch 40 which is similar to switch 38. Now, control circuit 30c further includes a timing means 42 which sequentially steps switch 40 from its "off" through its "start", to its "run" position in a timed sequence. Accordingly, the user need only activate the timing means for the timing means to automatically energize the auxiliary windings for a period sufficient for the rotor to be properly be aligned for starting, and then automatically de-energize the auxiliary windings, and energize the stator windings.

In Fig. 4D, a switch 44 is again similar to switch 38. Now, control circuit 30d further includes a sensing means 46 which sequentially steps switch 44 from its "off" through its "start", to its "run" position. Whereas timing means 42 automatically stepped switch 40 in a timed sequence, sensing means 46 steps the swich from its "start" to its "run" position, as a function of the sensed rotor position. Thus, the user first moves switch 44 from "off" to "start", energizing the auxiliary windings. When the rotor is moved to its Fig. 3 position, as previously described, sensing means 46 detects that the rotor has attained this position. The sensing means output indicating the rotor is now at its preferred aligned position automatically sequences the switch from its "start" to its "run" position, again to effect energization of the stator windings as previously described. Sensing means 46 may be any of a number of rotor position sensors such as a Hall effect sensor without departing from the scope of the invention.

Referring to Fig. 6, an alternate embodiment of the dynamo-electric machine is indicated generally 100. Again, the machine is a single-phase switched reluctance motor. The motor has a stator assembly 112 including a stator 114. The stator has a central bore 116 and a plurality of inwardly salient poles (118a-118d) extending into bore 116. As with motor 10, although stator 114 is shown to have four poles, it may have more than that number. The stator further includes stator windings 120, 121 installed on opposed stator poles 118a, 118c.

A rotor 122 is mounted on a rotor shaft 124. The rotor is disposed in bore 116 for rotation relative to the stator assembly and the includes respective poles 126a, 126b which have a stepped outer face so to form a stepped air gap with the corresponding stator poles. As before, while rotor 122 has only two rotor poles, it could have more than two poles. To aid in starting the motor,auxiliary windings 128 are installed on stator pole 18d and the stator pole 18(b) (not shown). The auxiliary windings are used for starting the motor as described hereinabove. Now, unlike the rotor pole construction of Figs. 2 and 3, the rotor poles 126a, 126b have a stepped outer face to create the stepped air gaps between the respective stator and rotor poles. A shifted pole switched reluctance motor is described in U.S patent 5 294 856. One advantage of a shifted pole motor is that it also aids in starting the motor. Such a motor construction, used in accordance with the present invention is shown in Fig. 7. In Fig. 7, both of the stator poles on which auxiliary windings are installed are shifted with respect to the stator poles on which the main stator windings are installed. Again, switching between the auxiliary windings and main windings to effect efficient starting of the motor is as above described.

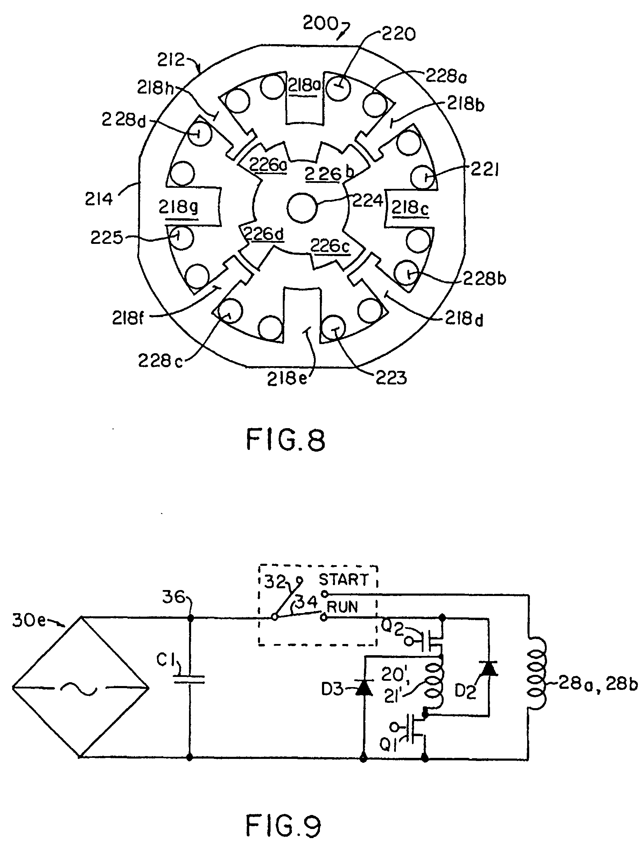

The motor configurations previously described represent 2:2 motors. In Fig. 8, a 4:4 motor 200 is shown. This motor has a stator assembly 212 including a stator 214 with stator teeth 218a-218h. A rotor 222 mounted on a rotor shaft 224 has salient rotor teeth 226a-226d. Motor 200 has main stator windings 220, 221, 223, and 225 and auxiliary windings 228a-228d. Operation of the motor is similar to that of the motors previously described. Motor 200 illustrates that the present invention is useful with motors whose stator pole/rotor pole ratio of 2(n):2(n) where n is a positive whole integer.

Fig. 9 illustrates a control circuit 30e similar to that in Fig. 4A, except for windings that are non-bifilar windings. Now, stator windings 20', 21' are series connected as are auxiliary windings 28a, 28b. A second semi-conductor switch Q2 is interposed between RUN switch 34 and the stator windings. A diode D2 is connected in parallel with switch Q2 and the series connected stator windings. Another diode D3 is connected across the stator windings and switch Q1. Operation of the control circuit 30e is such that windings 20', 21' do not now have to be bifilar windings in order to return energy to the DC bus.

What has been described is an improved dynamoelectric machine which is a single-phase switched reluctance motor. The motor has two auxiliary coils to facilitate starting the motor. The auxiliary coils are energized while the motor is off to align a rotor of the motor with the auxiliary coils to help reduce the starting torque required to start the motor. The auxiliary coils are switched out of the motor circuit, after the motor is started since they are not required during normal operation of the motor. Alignment of the rotor enables a phase winding of the motor to produce sufficient torque to start the motor, this level of torque being less than would otherwise be required to start the motor. In addition, the motor can have stepped air gap and shifted pole construction. This evens out the available torque over the widest angle the auxiliary coils can produce, and helps realign the rotor. Because the auxiliary coils are not used to run the motor, they require less copper than the other phase windings of the motor. Consequently, the motor is less expensive than a two-phase motor having similar operating performance because electronic switches and rotor sensors required with a two-phase motor are not required.

In view of the foregoing, it will be seen that the several objects of the invention are achieved and other advantageous results are obtained.

## Claims

1. A dynamo-electric machine (10) comprising:
a stator assembly (12) including a stator (14) having a central bore (16) and a plurality of inwardly salient poles (18) extending into said bore;
a rotor (22) mounted on a shaft (24) and installed in said central bore for rotation of said rotor relative to said stator, said rotor having a plurality of outwardly salient poles (26) extending into said bore, there being an air gap (G) between the respective outer ends of said stator and rotor poles; and
stator windings (20,21) installed on the stator assembly, said stator windings being energized when said machine is running to produce a magnetic field;
auxiliary windings (28); and
a controller (30) operable to energize said auxiliary windings when said machine is off to produce a magnetic field which causes rotation of said rotor to a preferred aligned position relative to said stator poles to facilitate subsequent starting of the machine, said controller further operable to de-energize said auxiliary windings and energize said stator windings when said machine is on;
**CHARACTERISED IN THAT**:
said auxiliary windings (28) are installed on opposed poles of said stator assembly;
each stator pole has either a stator winding or an auxiliary winding installed thereon;
and said stator windings and said auxiliary windings are installed on alternate stator poles.

2. The dynamo-electric machine of claim I wherein said plurality of stator poles comprises four stator poles forming two pairs of opposed stator poles, wherein each stator pole of one opposed pair (18a,18c) has a stator winding installed thereon, and each stator pole of the other opposed pair (18b,18d) has an auxiliary winding installed thereon.

3. The dynamo-electric machine of claim 2 wherein both stator poles of one pair are shifted (118a,118d) with respect to the stator poles of the other opposed pair (118a,118c), and wherein the auxiliary windings are installed on the shifted stator poles.

4. The dynamo-electric machine of claim 1 wherein said controller includes a first switch for energizing the auxiliary winding while the machine is off, and a second switch for subsequently energizing the stator windings.

5. The dynamo-electric machine of claim 1 wherein said controller includes a multi-position switch having a first and machine "off" position in which neither the stator windings nor the auxiliary windings are energized, a second and machine "start" position in which the auxiliary windings but not the stator windings are energized, and a third and machine "run" position in which auxiliary windings are de-energized, and the stator windings are energized.

6. The dynamo-electric machine of claim 5 further including timing means for sequentially stepping the switch first from its "off' to its "start" position and then from its "start" to its "run" position in a timed sequence, the timing means energizing the auxiliary windings for a period sufficient for the rotor to be properly aligned for starting.

7. The dynamo-electric machine of claim 1 wherein the rotor poles have stepped outer faces to form a stepped air gap relative to the stator poles.

8. The dynamo-electric machine of claim 1 wherein said stator windings are bifilar windings.

## Patentansprüche

1. Dynamoelektrische Maschine (10) mit:
einer Statoranordnung (12), die einen Stator (14) mit einer zentralen Bohrung (16) und einer Vielzahl von nach innen vorspringenden Polen (18), die sich in die Bohrung erstrecken, aufweist;
einem Rotor (22), der auf einer Welle (24) angebracht und zur Drehung des Rotors bezüglich des Stators in der zentralen Bohrung angeordnet ist, wobei der Rotor eine Vielzahl von nach außen vorspringenden Polen (26) aufweist, die sich in die Bohrung erstrecken, wobei ein Luftspalt (G) zwischen den jeweiligen äußeren Enden der Stator- und Rotorpole ausgebildet ist; und
Statorwicklungen (20, 21), die an der Statoranordnung angebracht sind, wobei die Statorwicklungen elektrisch erregt werden, wenn die Maschine läuft, um ein Magnetfeld zu erzeugen;
Hilfswicklungen (28); und
einem Regler (30), der derart zu betreiben ist, dass er die Hilfswicklungen elektrisch erregt, wenn die Maschine ausgeschaltet ist, um ein Magnetfeld zu erzeugen, das die Drehung des Rotors in eine bevorzugt ausgerichtete Position bezüglich der Statorpole bewirkt, um ein nachfolgendes Anlassen der Maschine zu erleichtern, wobei der Regler ferner derart zu betreiben ist, dass er die Hilfswicklungen von der Stromquelle trennt und die Statorwicklungen erregt, wenn die Maschine an ist;
**dadurch gekennzeichnet, dass**:
die Hilfswicklungen (28) an gegenüberliegenden Polen der Statoranordnung angebracht sind; wobei die Statorwicklungen und die Hilfswicklungen an abwechselnden Statorpolen angebracht sind; und wobei jeder Statorpol entweder eine Statorwicklung oder eine Hilfswicklung daran angebracht aufweist.

2. Dynamoelektrische Maschine gemäß Anspruch 1, wobei die Vielzahl von Statorpolen vier Statorpole aufweist, welche zwei Paare gegenüberliegender Statorpole bilden, wobei an jedem Statorpol eines gegenüberliegenden Paares (18a, 18c) eine Statorwicklung angebracht ist und an jedem Statorpol des anderen gegenüberliegenden Paares (18b, 18d) eine Hilfswicklung angebracht ist.

3. Dynamoelektrische Maschine gemäß Anspruch 2, wobei beide Statorpole eines Paares (118b, 118d) bezüglich der Statorpole des anderen gegenüberliegenden Paares (118a, 118c) versetzt angeordnet sind, und wobei die Hilfswicklungen an den versetzt angeordneten Statorpolen angebracht sind.

4. Dynamoelektrische Maschine gemäß Anspruch 1, wobei der Regler einen ersten Schalter zur Erregung der Hilfswicklungen, während die Maschine ausgeschaltet ist, und einen zweiten Schalter zur nachfolgenden Erregung der Statorwicklungen aufweist.

5. Dynamoelektrische Maschine gemäß Anspruch 1, wobei der Regler einen Mehrfachpositionsschalter umfasst mit einer ersten und Maschine-"ausgeschaltet"-Position, in welcher weder die Statorwicklungen noch die Hilfswicklungen erregt werden, einer zweiten und Maschine-"anlass"-Position, in welcher die Hilfswicklungen, aber nicht die Statorwicklungen, erregt werden und einer dritten und Maschine-"lauf"-Position, in welcher die Hilfswicklungen von der Stromquelle abgetrennt und die Statorwicklungen erregt werden.

6. Dynamoelektrische Maschine gemäß Anspruch 5, welche ferner eine Timervorrichtung umfasst, um den Schalter hintereinander in einer zeitlich vorgegebenen Abfolge von seiner "Ausgeschaltet"-Position in seine "Anlass"-Position und dann von seiner "Anlass"-Position in seine "Lauf"-Position umzuschalten, wobei die Timervorrichtung die Hilfswicklungen über einen Zeitraum erregt, der ausreicht, um den Rotor zum Anlassen korrekt auszurichten.

7. Dynamoelektrische Maschine gemäß Anspruch 1, wobei die Rotorpole abgestufte Außenflächen aufweisen, um einen abgestuften Luftspalt bezüglich der Statorpole auszubilden.

8. Dynamoelektrische Maschine gemäß Anspruch 1, wobei die Statorwicklungen Bifilarwicklungen sind.

## Revendications

1. Machine dynamoélectrique (10) comprenant :
un assemblage de stator (12) comportant un stator (14) présentant un alésage central (16) et une pluralité de pôles saillants vers l'intérieur (18) s'étendant dans ledit alésage ;
un rotor (22) montés sur un arbre (24) et installé. dans ledit alésage central pour la rotation dudit rotor par rapport audit stator, ledit rotor présentant une pluralité de pôles saillants vers l'extérieur (26) s'étendant dans ledit alésage, un entrefer d'air (G) se trouvant entre les extrémités externes respectives desdits pôles de stator et rotor ; et
des enroulements de stator (20, 21) installés sur l'assemblage de stator, lesdits enroulements de stator étant excités lorsque ladite machine fonctionne pour produire un champ magnétique ;
des enroulements auxiliaires (28) ; et
un contrôleur (30) pouvant être actionné pour exciter lesdits enroulements auxiliaires lorsque ladite machine est arrêtée pour produire un champ magnétique provoquant la rotation dudit rotor jusqu'à une position alignée préférée par rapport auxdits pôles de stator pour faciliter le démarrage ultérieur de la machine, ledit contrôleur pouvant en outre être actionné pour désexciter lesdits enroulements auxiliaires et exciter lesdits enroulements de stator lorsque ladite machine fonctionne ;
**caractérisé en ce que** :
lesdits enroulements auxiliaires (28) sont installés sur des pôles opposés dudit assemblage de stator ;
chaque pôle de stator comporte un enroulement de stator ou un enroulement auxiliaire installé sur celui-ci ; et
lesdits enroulements de stator et lesdits enroulements auxiliaires sont installés sur des pôles de stator alternés.

2. Machine dynamoélectrique selon la revendication 1, dans laquelle ladite pluralité de pôles de stator comprend quatre pôles de stator formant deux paires de pôles de stator opposées, dans laquelle chaque pôle de stator d'une paire opposée (18a, 18c) possède un enroulement de stator installé sur celui-ci et chaque pôle de stator de l'autre paire opposée (18b, 18d) possède un enroulement auxiliaire installé sur celui-ci.

3. Machine dynamoélectrique selon la revendication 2, dans laquelle les deux pôles de stator d'une paire sont décalés (118a, 118d) par rapport aux pôles de stator de l'autre paire opposée (118a, 118e) et dans laquelle les enroulements auxiliaires sont installés sur les pôles de stator décalés.

4. Machine dynamoélectrique selon la revendication 1, dans laquelle ledit contrôleur comporte un premier commutateur pour exciter l'enroulement auxiliaire pendant que la machine est arrêtée et un second commutateur pour exciter par la suite les enroulements de stator.

5. Machine dynamoélectrique selon la revendication 1, dans laquelle ledit contrôleur comporte un commutateur à plusieurs positions ayant une première position "d'arrêt" de machine dans laquelle, ni les enroulements de stator ni les enroulements auxiliaires ne sont excités, une deuxième position "de démarrage" de machine dans laquelle les enroulements auxiliaires mais pas les enroulements de stator sont excités et une troisième position "de fonctionnement" de machine dans laquelle les enroulements auxiliaires sont désexcités et les enroulements de stator sont excités.

6. Machine dynamoélectrique selon la revendication 5, comportant en outre un moyen de séquencement pour faire avancer en séquence le commutateur par paliers de sa position "d'arrêt" jusqu'à sa position "de démarrage", puis de sa position "de démarrage" jusqu'à sa position "de fonctionnement" selon une séquence synchronisée, le moyen de séquencement excitant les enrôlements auxiliaires pendant une période suffisante pour que le rotor soit convenablement aligné pour le démarrage.

7. Machine dynamoélectrique selon la revendication 1, dans laquelle les pôles de rotor possèdent des faces externes échelonnées pour former un entrefer d'air échelonné par rapport aux pôles de stator.

8. Machine dynamoélectrique selon la revendication 1, dans laquelle lesdits enroulements de stator sont des enroulements bifilaires.
